# EUROPÄISCHE PATENTSCHRIFT

(11) **EP 1 394 914 B1**
(45) Veröffentlichungstag und Bekanntmachung des Hinweises auf die Patenterteilung: **16.05.2007**
(21) Anmeldenummer: 03016917.1
(22) Anmeldetag: 24.07.2003
(51) Int. Cl.: H02B 1/18, H02G 3/08, B60P 3/36, H01R 9/26, B60R 16/02

(54) **Vorrichtung zum Anschluss von Stromquellen und elektrischen Verbrauchern in einem Wohnmobil oder Wohnwagen**
Device for connection of power sources and electric loads in a mobile home and caravan
Dispositif de connexion des sources d'alimentation et des charges électriques dans une maison mobile et une caravane

(30) Priorität: 26.07.2002 DE 20211318 U
(43) Veröffentlichungstag der Anmeldung: 03.03.2004
(73) Patentinhaber: Reich KG, Regel- und Sicherheitstechnik, 35713 Eschenburg-Wissenbach (DE)
(72) Erfinder: Bender, Steffen, 35745 Herborn (DE)
(74) Vertreter: Hofstetter, Alfons J.

(56) Entgegenhaltungen:
- EP-A- 0 731 001
- EP-A- 1 213 810
- DE-U- 20 111 162

## Beschreibung

Die vorliegende Erfindung betrifft eine Vorrichtung zum Anschluss von Stromquellen und elektrischen Verbrauchern in einem Wohnmobil oder einem Wohnwagen, wobei die Vorrichtung als Verteil- und Sicherungsmodul ausgebildet ist und mindestens eine Batterieanschlussstelle, mindestens eine Anschlussstelle für mindestens einen elektrischen Verbraucher im Wohnmobil oder Wohnwagen und mindestens einen Datenanschluss als Eingang zur Datenaufnahme aufweist.

Derartige Vorrichtungen zum Anschluss von Stromquellen und elektrischen Verbrauchern in Wohnmobilen oder Wohnwagen sind bekannt. Sie dienen dabei insbesondere als Verteil- und Sicherungsmodule für die einzelnen in dem Wohnmobil oder Wohnwagen vorhandenen Stromkreise. Üblicherweise sind zudem zwei Batterieanschlussstellen vorhanden. Mittels eines sogenannten Batterietrennschalters können die Batterien ein- und ausgeschalten werden. Obwohl derartige Vorrichtungen eine zentrale Funktion innerhalb eines Wohnmobils oder eines Wohnwagens ausüben, sind sie bisher auf diese Funktionen beschränkt und festgelegt.

Insbesondere ist eine Vorrichtung der eingangs genannten Art aus der DE 201 11 162 U1 bekannt. Diese Vorrichtung ist als eine kompakte Baueinheit ausgebildet und besteht aus einem Gehäuse mit einem Schaltnetzteil, in dem die Reduzierung und Gleichrichtung einer anliegenden Wechselstromspannung auf 12V Gleichstrom realisiert wird. Mit dem Schaltnetzteil steht eine Power-Faktor-Regelung in Wirkverbindung. Außerdem ist eine Schutzschaltung vorgesehen, die im Notfall eine Stillsetzung des Schaltnetzteiles bewirkt. Dazu ist die Schutzschaltung mit Sensoreingängen ausgebildet, an denen Überwachungssensoren angeschlossen werden können. Die Sensoren sind Sicherheitssensoren, die bei Gefahren wie Brand, Explosionen, Wasserschäden, Überlastung des Stromnetzes, Gasaustritt, in Funktion treten und entsprechende Befehle auf die Schutzschaltung geben. Dadurch soll ein sicherer Betrieb der Vorrichtung gewährleistet werden.

Es ist daher Aufgabe der vorliegenden Erfindung, eine Vorrichtung zum Anschluss von Stromquellen und elektrischen Verbrauchern in einem Wohnmobil oder einem Wohnwagen bereitzustellen, die vielseitig verwendbar ist.

Zur Lösung dieser Aufgabe dienen die Merkmale des unabhängigen Anspruches.

Vorteilhafte Ausgestaltungen sind in den Unteransprüchen beschrieben.

Bei einer erfindungsgemäßen Vorrichtung zum Anschluss von Stromquellen und elektrischen Verbrauchern in einem Wohnmobil oder einem Wohnwagen ist der mindestens eine Datenanschluss auch als Ausgang zur Datenübertragung ausgebildet. Außerdem weist die erfindungsgemäße Vorrichtung mindestens eine Sendeeinheit zur Übertragung von Daten auf. Durch diese Art der Datenübertragung kann auf umständliche Verkabelungen innerhalb des Wohnmobils oder Wohnwagens vorteilhafterweise verzichtet werden. Die Ausbildung von Datenanschlüssen an der erfindungsgemäßen Vorrichtung erlaubt es vorteilhafterweise, die Einsatzmöglichkeiten der Vorrichtung nahezu unbegrenzt zu erweitern. Durch die erfindungsgemäße Ausbildung der Vorrichtung ist diese nicht nur als Verteil- und Sicherungsmodul, sondern auch als zentrale Datenaufnahme- und Datenübertragungseinheit ausgebildet. Der oder die Datenanschlüsse können dabei als digitale Dateneingänge und Datenausgänge ausgebildet sein. Ferner kann die Sendeeinheit auch als Empfangseinheit zum Empfang von Daten ausgebildet sein oder es kann zusätzlich zur Sendeeinheit mindestens eine Empfangseinheit zum Empfang von Daten vorgesehen sein.

Vorzugsweise sind an dem oder den Datenanschlüssen Sensoren zur Aufnahme und Übermittlung von Umgebungsparametern und Betriebszuständen von in dem Wohnmobil oder Wohnwagen angeordneten Elementen angeschlossen. Die Sensoren können dabei zur Erfassung der Innen- und Außentemperatur, der Feuchtigkeit, des Luftdrucks, der Rauchentwicklung, von Gas in der Umgebungsluft, von Gasmengen in Gasflaschen des Wohnmobils oder Wohnwagens, zur Erfassung von Flüssigkeitsmengen von innerhalb des Wohnmobils oder Wohnwagens angeordneten Flüssigkeitstanks, zur Überwachung der Schließstellung von Türen, Fenstern und sonstigen am Wohnmobil oder Wohnwagen ausgebildeten Klappen und/oder zur optischen Erfassung ausgebildet sein.

In einer vorteilhaften Ausgestaltung der Erfindung ist mindestens ein Ausgang eines Datenanschlusses mit einem Warn- oder Kontrollsystem verbunden. So kann vorteilhafterweise bei einer Rauchentwicklung innerhalb des Wohnmobils oder Wohnwagens oder auch bei der Erfassung von Gas in der Umgebungsluft ein Warnsystem mit entsprechenden akustischen und/oder optischen Warnsystemen aktiviert werden. Des weiteren ist es möglich, dass mindestens ein Datenanschluss mit einem Antriebsmotor des Wohnmobils verbunden ist. Dadurch ist es möglich, aktuelle Betriebsdaten des Motors zu empfangen und entsprechend anzeigen zu lassen. Hierzu ist mindestens ein Datenanschluss der erfindungsgemäßen Vorrichtung mit einer im Wohnmobil oder im Wohnwagen angeordneten Anzeigevorrichtung in datenübertragender Weise verbunden. Es ist aber auch möglich, dass die Vorrichtung selbst eine Anzeigefläche zur Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt. Dabei weist die Vorrichtung mindestens ein Bedienungselement zur Auswahl der Anzeige und/oder Eingabe mindestens eines Datenwertes auf. Das Bedienungselement kann dabei als multifunktioneller Dreh-/Drückschalter ausgebildet sein.

In einer weiteren vorteilhaften Ausgestaltung der Erfindung ist die Polarität mindestens eines Ausgangs eines Datenanschlusses umkehrbar ausgebildet. Dies führt zu einer deutlichen Erhöhung der Verwendungsmöglichkeiten der entsprechenden Datenanschlüsse bzw. deren Ausgängen.

Weitere Einzelheiten, Merkmale und Vorteile der Erfindung ergeben sich aus der folgenden Beschreibung eines zeichnerisch dargestellten Ausführungsbeispiels. Es zeigen
- Figur 1: eine schematische Darstellung einer erfindungsgemäßen Vorrichtung zum Anschluss von Stromquellen und elektrischen Verbrauchern in einem Wohnmobil oder einem Wohnwagen, und
- Figur 2: eine weitere schematische Darstellung der erfindungsgemäßen Vorrichtung zum Anschluss von Stromquellen und elektrischen Verbrauchern in einem Wohnmobil oder einem Wohnwagen.

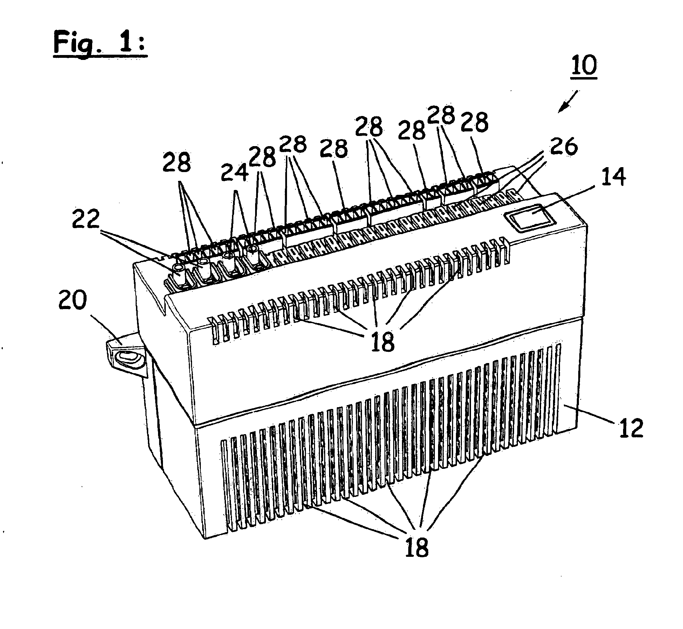

Figur 1 zeigt eine schematische Darstellung einer Vorrichtung 10 zum Anschluss von Stromquellen und elektrischen Verbrauchern in einem Wohnmobil oder Wohnwagen. Die Vorrichtung 10 weist dabei ein Gehäuse 12 mit einer Vielzahl von Lüftungsschlitzen 18 auf. Zudem sind an dem Gehäuse 12 mehrere Befestigungsvorrichtungen 20 ausgebildet, so dass die Vorrichtung 10 sicher und unverrückbar innerhalb des Wohnmobils oder Wohnwagens angebracht werden kann. Des weiteren weist die Vorrichtung 10 einen Netzschalter 14 zum Ein- und Ausschalten der gesamten Vorrichtung 10 auf.

Man erkennt, dass an der Vorrichtung 10 eine Sicherungssteckleiste 26 zum Einfügen entsprechender Einzelsicherungen ausgebildet ist. Des weiteren weist die dargestellte Vorrichtung 10 zwei Batterieanschlüsse 22, 24 zum Anschluss von jeweils einer Batterie auf. Schließlich erkennt man des weiteren eine Vielzahl von Anschlussstellen 28, die zum Anschluss von entsprechenden Stromverbrauchern innerhalb des Wohnmobils oder Wohnwagens dienen. Insbesondere handelt es sich hierbei um sogenannte 12 V-Verbraucher, wie zum Beispiel Lichtanlagen, Kühlschränke, Fernseher, Radios, Kameras oder Ähnliches. Aus der Darstellung wird deutlich, dass die Vorrichtung 10 als Verteil- und Sicherungsmodul ausgebildet ist.

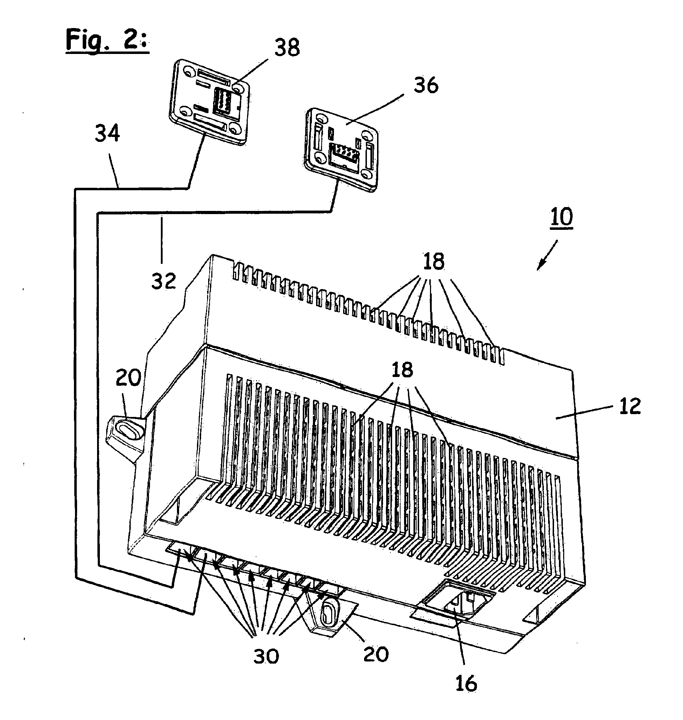

Figur 2 zeigt eine weitere schematische der Vorrichtung 10. Man erkennt, dass die Vorrichtung 10 zusätzlich eine Vielzahl von Datenanschlüssen 30 als Ein- und Ausgang zur Datenaufnahme und -übertragung aufweist. Die Datenanschlüsse können dabei als digitaler Dateneingang und Datenausgang ausgebildet sein. Durch das Vorhandensein der Datenanschlüsse 30 ist es möglich, Sensoren zur Aufnahme und Übermittlung von Umgebungsparametern und Betriebszuständen von in dem Wohnmobil oder Wohnwagen angeordneten Elementen an der Vorrichtung 10 anzuschließen. Die Sensoren können dabei zur Erfassung der Innen- und Außentemperatur, der Feuchtigkeit, des Luftdrucks, der Rauchentwicklung, von Gas in der Umgebungsluft, von Gasmengen in Gasflaschen des Wohnmobils oder Wohnwagens, zur Erfassung von Flüssigkeitsmengen von innerhalb des Wohnmobils oder Wohnwagens angeordneten Flüssigkeitstank, zur Überwachung der Schließstellung von Türen, Fenstern und sonstigen am Wohnmobil oder Wohnwagen ausgebildeten Klappen und/oder zur optischen Erfassung ausgebildet sein. In dem dargestellten Ausführungsbeispiel sind zwei Datenanschlüsse 30 über entsprechende Datenleitungen 32, 34 mit jeweils einem Kontaktelement 36, 38 zum Anschluss einer Anzeigevorrichtung (nicht dargestellt) belegt. Es ist aber auch möglich, dass mindestens ein Ausgang eines Datenanschlusses 30 mit einem Warn- oder Kontrollsystem verbunden ist. Des weiteren kann mindestens ein Datenanschluss 30 mit einem Antriebsmotor des Wohnmobils verbunden sein. Zudem besteht die Möglichkeit die Polarität der Ausgänge der Datenanschlüsse 30 umzukehren. Schließlich kann die Vorrichtung 10 eine Sende- und/oder Empfangseinheit zur Übertragung und/oder zum Empfang von Daten (nicht dargestellt) aufweisen.

Des weiteren ist in Figur 2 eine Netzanschluss 16 der Vorrichtung 10 erkennbar.

In einer weiteren, nicht dargestellten Ausführungsform weist die Vorrichtung 10 eine Anzeigefläche zur Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt. Dabei kann die Vorrichtung 10 ein Bedienungselement zur Auswahl der Anzeige des Datenwertes aufweisen. Das Bedienungselement ist üblicherweise als multifunktioneller Dreh-/Drückschalter ausgebildet.

## Patentansprüche

1. Vorrichtung zum Anschluss von Stromquellen und elektrischen Verbrauchern in einem Wohnmobil oder einem Wohnwagen, wobei die Vorrichtung (10) als Verteil- und Sicherungsmodul ausgebildet ist und mindestens eine Batterieanschlussstelle (22, 24), mindestens eine Anschlussstelle (28) für mindestens einen elektrischen Verbraucher im Wohnmobil oder Wohnwagen und mindestens einen Datenanschluss (30) als Eingang zur Datenaufnahme aufweist,
**dadurch gekennzeichnet,**
**dass** der mindestens eine Datenanschluss (30) auch als Ausgang zur Datenübertragung ausgebildet ist, und
**dass** die Vorrichtung (10) mindestens eine Sendeeinheit zur Übertragung von Daten aufweist.

2. Vorrichtung nach Anspruch 1,
**dadurch gekennzeichnet,**
**dass** der Datenanschluss (30) als digitaler Dateneingang und -ausgang ausgebildet ist.

3. Vorrichtung nach Anspruch 1 oder 2,
**dadurch gekennzeichnet,**
**dass** an dem oder den Datenanschlüssen (30) Sensoren zur Aufnahme und Übermittlung von Umgebungsparametern und Betriebszuständen von in dem Wohnmobil oder Wohnwagen angeordneten Elementen angeschlossen sind.

4. Vorrichtung nach Anspruch 3,
**dadurch gekennzeichnet,**
**dass** die Sensoren zur Erfassung der Innen- und Außentemperatur, der Feuchtigkeit, des Luftdrucks, der Rauchentwicklung, von Gas in der Umgebungsluft, von Gasmengen in Gasflaschen des Wohnmobils oder Wohnwagens, zur Erfassung von Flüssigkeitsmengen von innerhalb des Wohnmobils oder Wohnwagen angeordneten Flüssigkeitstanks, zur Überwachung der Schließstellung von Türen, Fenstern und sonstigen am Wohnmobil oder Wohnwagen ausgebildeten Klappen und/oder zu optischen Erfassung ausgebildet sind.

5. Vorrichtung nach einem der vorhergehenden Ansprüche,
**dadurch gekennzeichnet,**
**dass** mindestens ein Ausgang eines Datenanschlusses (30) mit einem Warn- oder Kontrollsystem verbunden ist.

6. Vorrichtung nach einem der vorhergehenden Ansprüche,
**dadurch gekennzeichnet,**
**dass** mindestens ein Datenanschluss (30) mit einem Antriebsmotor des Wohnmobils verbunden ist.

7. Vorrichtung nach einem der vorhergehenden Ansprüche,
**dadurch gekennzeichnet,**
**dass** mindestens ein Datenanschluss (30) mit einer im Wohnmobil oder im Wohnwagen angeordneten Anzeigevorrichtung in datenübertragender Weise verbunden ist.

8. Vorrichtung nach einem der vorhergehenden Ansprüche,
**dadurch gekennzeichnet,**
**dass** die Polarität mindestens eines Ausgang eines Datenanschlusses (30) umkehrbar ist.

9. Vorrichtung nach einem der vorhergehenden Ansprüche,
**dadurch gekennzeichnet,**
**dass** die Vorrichtung (10) eine Anzeigefläche zur Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt, aufweist.

10. Vorrichtung nach Anspruch 9,
**dadurch gekennzeichnet,**
**dass** die Vorrichtung (10) mindestens ein Bedienungselement zur Auswahl der Anzeige mindestens eines Datenwerts aufweist.

11. Vorrichtung nach Anspruch 10,
**dadurch gekennzeichnet,**
**dass** das Bedienungselement als multifunktioneller Dreh-/Drückschalter ausgebildet ist.

12. Vorrichtung nach einem der vorhergehenden Ansprüche,
**dadurch gekennzeichnet,**
**dass** die Sendeeinheit auch als Empfangseinheit zum Empfang von Daten ausgebildet ist.

13. Vorrichtung nach einem der Ansprüche 1 bis 11,
**dadurch gekennzeichnet,**
**dass** die Vorrichtung (10) zudem mindestens eine Empfangseinheit zum Empfang von Daten aufweist.

## Claims

1. Device for connecting current sources and electrical users in a camper van or a caravan, with the device (10) being designed as distributor and fuse module and at least one battery terminal (22, 24), having at least one terminal (28) for at least one electrical user in the camper van or caravan and at least one data terminal (30) as input for data acquisition,
**characterized in that**
the at least one data terminal (30) is also designed as output for the data transmission, and
that the device (10) has at least one transmission unit for data transmission.

2. Device according to claim 1,
**characterized in that**
the data terminal (30) is designed as digital data input and output.

3. Device according to claim 1 and 2,
**characterized in that**
at the data terminal or terminals (30) sensors are connected for receipt and transmission of ambient parameters and operational states of elements arranged within the camper van or caravan.

4. Device according to claim 3,
**characterized in that**
the sensors for acquiring the internal and the external temperature, humidity, air pressure, smoke emission, gas in the surrounding air, gas amounts in gas cylinders of the camper van or caravan, for acquiring amounts of liquid of liquid tanks arranged within the camper van or caravan, for monitoring the locking position of doors, windows and other flaps formed on the camper van or caravan and/or for optical acquisition.

5. Device according to one of the preceding claims,
**characterized in that**
at least one output of a data terminal (30) is connected to a warning or control system.

6. Device according to one of the preceding claims,
**characterized in that**
at least one data terminal (30) is connected to a drive motor of the camper van.

7. Device according to one of the preceding claims,
**characterized in that**
at least one data terminal (30) with a display device arranged in the camper van or caravan is connected in data-transmitting mode.

8. Device according to one of the preceding claims,
**characterized in that**
the polarity of at least one output of a data terminal (30) is invertible.

9. Device according to one of the preceding claims,
**characterized in that**
the device (10) is a display surface for displaying and/or entering at least one data value, with the data value representing at least one time-wise preceding, current or desired operational state of elements or ambient parameters within or outside of the camper van or caravan.

10. Device according to claim 9,
**characterized in that**
the device (10) has at least one operational element for selection of the display of at least one data value.

11. Device according to claim 10,
**characterized in that**
the operational element is designed as multifunctional rotary switch or push button.

12. Device according to one of the preceding claims,
**characterized in that**
the sending unit is also designed as reception unit for receiving data.

13. Device according to claims 1 to 11,
**characterized in that**
the device (10) moreover has at least one reception unit for receiving data.

## Revendications

1. Dispositif de raccordement de sources de courant et de consommateurs électriques dans un camping-car ou une caravane, le dispositif (10) étant réalisé en tant que module de répartition et coupe-circuit et présentant au moins un emplacement de raccordement de batterie (22, 24), au moins un emplacement de raccordement (28) pour au moins un consommateur électrique dans le camping-car ou la caravane et au moins un raccordement de données (30) en tant qu'entrée d'acquisition de données,
**caractérisé en ce que**
au moins un raccordement de données (30) est également réalisé en tant que sortie de transmission de données et
que le dispositif (10) présente au moins une unité d'émission pour la transmission de données.

2. Dispositif selon la revendication 1,
**caractérisé en ce que**
le raccordement de données (30) est réalisé en tant qu'entrée et sortie numérique de données.

3. Dispositif selon la revendication 1 ou 2
**caractérisé en ce que**
au ou aux raccordements de données (30) sont raccordés des détecteurs pour la détection et la transmission de paramètres de l'environnement et d'états d'exploitation d'éléments disposés dans le camping-car ou la caravane.

4. Dispositif selon la revendication 3,
**caractérisé en ce que**
les capteurs sont réalisés pour l'acquisition de la température intérieure et extérieure, de l'humidité, de la pression atmosphérique, de la production de fumée, de gaz dans l'air environnant, de quantités de gaz dans des bouteilles de gaz du camping-car ou de la caravane, pour l'acquisition de quantités de liquides de réservoirs de liquide disposés à l'intérieur du camping-car ou de la caravane, pour la surveillance de la position fermée de portes, de fenêtres et autres volets figurant au camping-car ou à la caravane et/ou pour l'acquisition optique.

5. Dispositif selon l'une quelconque des revendications précédentes,
**caractérisé en ce que**
au moins une sortie d'un raccordement de données (30) est reliée à un système d'avertissement ou de contrôle.

6. Dispositif selon l'une quelconque des revendications précédentes,
**caractérisé en ce que**
au moins un raccordement de données (30) est relié à un moteur d'entraînement du camping-car.

7. Dispositif selon l'une quelconque des revendications précédentes,
**caractérisé en ce que**
au moins un raccordement de données (30) est relié, d'une manière permettant la transmission de données, à dispositif d'affichage disposé dans le camping-car ou la caravane.

8. Dispositif selon l'une quelconque des revendications précédentes,
**caractérisé en ce que**
la polarité d'au moins une sortie d'un raccordement de données (30) peut être inversée.

9. Dispositif selon l'une quelconque des revendications précédentes,
**caractérisé en ce que**
le dispositif (10) présente une surface d'affichage pour l'affichage et/ou pour la saisie d'au moins une valeur de donnée, la valeur de donnée représentant au moins un état d'exploitation précédent, actuel ou souhaité d'éléments ou de paramètres de l'environnement à l'intérieur ou à l'extérieur du camping-car ou de la caravane.

10. Dispositif selon la revendication 9,
**caractérisé en ce que**
le dispositif (10) présente au moins un élément de commande pour la sélection de l'affichage d'au moins une valeur de donnée.

11. Dispositif selon la revendication 10,
**caractérisé en ce que**
l'élément de commande est réalisé en tant que commutateur multifonctionnel rotatif ou à enfoncer.

12. Dispositif selon l'une quelconque des revendications précédentes,
**caractérisé en ce que**
l'unité d'émission est également réalisée en tant qu'unité de réception pour la réception de données.

13. Dispositif selon l'une quelconque des revendications 1 à 11,
**caractérisé en ce que**
le dispositif (10) présente en outre au moins une unité de réception pour la réception de données.
